# EUROPÄISCHE PATENTSCHRIFT

(11) **EP 0 411 449 B1**
(45) Veröffentlichungstag und Bekanntmachung des Hinweises auf die Patenterteilung: **07.09.1994**
(21) Anmeldenummer: 90114211.7
(22) Anmeldetag: 25.07.1990
(51) Int. Cl.: B60R 21/13

(54) **Antriebsvorrichtung für einen Überrollbügel eines Kraftfahrzeugs**
Driving device for a roll bar of a motor vehicle
Dispositif d'entraînement pour un arceau de sécurité d'un véhicule automobile

(30) Priorität: 02.08.1989 DE 3925513
(43) Veröffentlichungstag der Anmeldung: 06.02.1991
(73) Patentinhaber: Bayerische Motoren Werke Aktiengesellschaft, 80788 München (DE); ALFRED TEVES GmbH & CO. OHG, 51693 Bergneustadt (DE)
(72) Erfinder: Nowack, Reinhard, D-5962 Drolshagen (DE); Reuber, Gerhard, D-5962 Drolshagen (DE); Dangl, Wolfgang, D-8000 München 60 (DE); Schick, Gerald, D-8044 Unterschleissheim (DE)
(74) Vertreter: Dexheimer, Rolf

(56) Entgegenhaltungen:
- EP-A- 0 298 929
- EP-A- 0 309 686
- DE-A- 3 723 378
- DE-C- 3 712 940
- US-A- 4 695 089

## Beschreibung

Die Erfindung bezieht sich auf eine Antriebsvorrichtung für einen Überrollbügel eines Kraftfahrzeugs nach dem Oberbegriff von Patentanspruch 1.

Bei einer bekannten derartigen Antriebsvorrichtung (EP-A-0 309 686) wird ein sich im wesentlichen in Fahrzeugguerrichtung erstreckender U-förmiger Bügel an beiden Schenkelenden von je einer federbelasteten, sensorgesteuerten Kolben-Zylinder-Einheit und - zur willkürlichen Verstellung - von einer hydraulisch beaufschlagbaren Kolben-Zylinder-Einheit betätigt. Die Verstellmechanismen für den Überrollbügel sind schwierig im Fahrzeugkonzept unterbringbar. Sie sind kompliziert aufgebaut und auch deren Justierung ist aufwendig und sensibel, zum Beispiel bei Fahrzeugverwindungen oder ähnlichem.

Bei Achskonstruktionen ist es schon bekannt (EP-A-0 298 929), die Radführungsglieder, Federn und Stoßdämpfer nicht direkt am Fahrzeugaufbau, sondern an einem Hilfsrahmen anzulenken bzw. abzustützen, der dann von unten mit der Bodengruppe des Fahrzeugs verbunden werden kann. Solche Hilfsrahmen werden zum einen wegen einer guten Vormontierbarkeit der Achse, zum anderen aber auch zum Erhöhen des Komforts verwendet. Die konstruktive Auslegung der Hilfsrahmen erfolgt einerseits unter Berücksichtigung der auf die Achse einwirkenden Kräfte, die aus der Kurvenfahrt, aus dem Bremsen, aus dem Antreiben des Fahrzeugs, aber auch durch Fahrbahnunregelmäßigkeiten herrühren können. Zum anderen soll die Übertragung von Fahrbahngeräuschen oder auch von Getriebegeräuschen in den Fahrzeugkörper möglichst gering gehalten werden. Hierzu wird unter anderem auch der Hilfsrahmen über elastische Verbindungsglieder von unten mit dem Karosserieboden verbunden.

Der Erfindung liegt die Aufgabe zugrunde, eine Antriebsvorrichtung für einen Überrollbügel eines Kraftfahrzeugs der vorausgesetzten Bauart zu schaffen, die mit dem ganzen Bügel-System einfach und platzsparend in das Fahrzeug integrierbar und gut justierbar ist. Der Antrieb soll ferner unkompliziert und trotzdem sicher in seiner Funktion sein.

Diese Aufgabe wird erfindungsgemäß dadurch gelöst, daß sowohl die Stellelemente, die Haltevorrichtung und die Verriegelungsvorrichtung als auch der Überrollbügel an einer in Fahrzeugguerrichtung angeordneten Grundplatte gelagert sind, die am Fahrzeugaufbau befestigbar ist, wobei der Überrollbügel in einer zur Grundplatte parallelen Ebene schwenkbar ist. Vorzugsweise erstreckt sich die Grundplatte in einer zumindest annähernd lotrechten Ebene und lagert in ihren seitlichen Bereichen zwei Überrollbügel, die in einer zur Grundplatte parallelen Ebene schwenkbar sind. Auf diese Weise können die beiden Überrollbügel mit ihren Haltevorrichtungen und ihren Verriegelungseinrichtungen besonders einfach außerhalb des Fahrzeugs montiert und genau einjustiert werden. Die Bauweise benötigt wenig Einbauraum im Fahrzeug und kann mit wenig Montageaufwand so im Fahrzeug fixiert werden, daß geringere Verformungen des Fahrzeugs, zum Beispiel Verwindungen, kaum einen Einfluß auf die Justierung und damit auf die Funktionssicherheit haben.

Weitere vorteilhafte Einzelheiten der Erfindung, die auch Gegenstand von Unteransprüchen sind, sind im folgenden anhand eines in der Zeichnung dargestellten Ausführungsbeispiels näher erläutert. Es zeigen:
- Figur 1: eine perspektivische Ansicht auf eine mit einem aufgerichteten Überrollbügel versehene Grundplatte mit den für seine Betätigung wesentlichen Antriebselementen;
- Figur 2: eine etwas schematisierte Längsansicht auf die linke Hälfte der in Figur 1 dargestellten Grundplatte mit einem eingeschwenkten linken Überrollbügel;
- Figur 3: eine der Figur 2 entsprechende Ansicht mit nach oben gerichtetem Überrollbügel nach manuellem, willkürlichem Auslösen und Aufstellen;
- Figur 4: eine der Figur 3 entsprechende Ansicht, jedoch nach automatischem, sensorgesteuertem Auslösen und Hochfahren des Bügels und
- Figur 5: eine der Figur 3 entsprechende Detaildarstellung, jedoch in vergrößertem Maßstab.

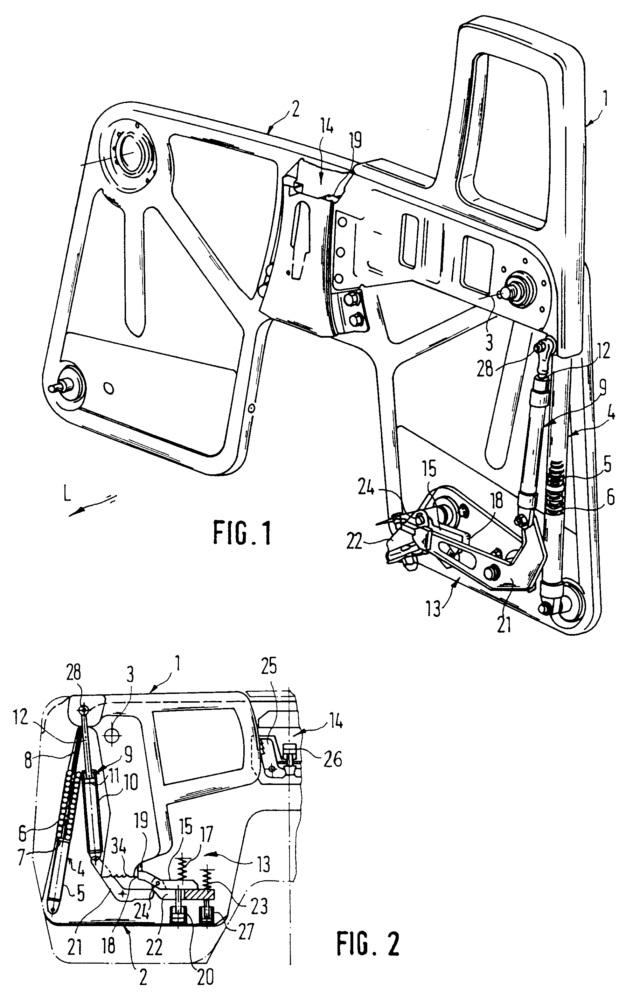

In Figur 1 der Zeichnung ist nur ein Überrollbügel 1 an der rechten Hälfte einer Grundplatte 2 dargestellt, während der linke Überrollbügel weggelassen ist. Der Überrollbügel 1 ist in seiner nach oben gerichteten Stützlage dargestellt, aus der er in die in Figur 2 anhand des anderen, zweiten Überrollbügels 1 ersichtliche abgesenkte Ruhelage verlagerbar ist. Bei dem dargestellten Ausführungbeispiel handelt es sich um schwenkbare Überrollbügel 1, die um zur Fahrzeuglängsrichtung L zumindest annähernd parallele Schwenkachsen 3 schwenkbar sind. Die Überrollbügel könnten an einer etwas anders gestalteten Grundplatte aber auch über andere Führungen, beispielsweise translatorisch, verlagerbar sein.

Aus der abgesenkten Ruhelage sind die Überrollbügel 1 unter der Wirkung eines sensorgesteuerten Stellelements 4 in die nach oben gerichtete Stützlage (Figur 1) schwenkbar. Das Stellelement 4 umfaßt eine Hülse 5, in der eine Druckfeder 6 angeordnet ist, die sich mit ihren Enden einerseits am oberen Hülsendeckel und andererseits an einer kolbenähnlichen Platte 7 einer in der Hülse verlagerbaren und durch den oberen Deckel nach außen geführten Zugstange 8 abstützt.

Zum manuell gesteuerten Aus- und Einfahren der Überrollbügel dient das Stellelement 9, das bei der dargestellten Ausführungsform durch einen doppelt wirkenden Hydraulikzylinder 10 mit einer durch einen Kolben 11 betätigbaren Kolbenstange 12 gebildet wird.

Wie man insbesondere in Figur 1 erkennt, sind an der Grundplatte 2 nicht nur die Stellelemente 4 und 9 abgestützt, sondern auch eine Haltevorrichtung 13 für jeden abgesenkten Überrollbügel und eine Verriegelungsvorrichtung 14 für jeden in Stützlage befindlichen Überrollbügel 1 angeordnet.

In den etwas schematisierten Darstellungen nach den Figuren 2 bis 4 ist mit 15 ein Haltehebel der Haltevorrichtung 13 bezeichnet, der in Ruhelage in die Bewegungsbahn 16 des Überrollbügels 1 ragt und aus dieser gegen die Wirkung einer Feder 17 herauschwenkbar ist.

In der eingeschwenkten Ruhelage (Figur 2) wirkt der Haltehebel 15 mit einer Stirnseite 18 mit einem entsprechenden Haltevorsprung 19 des Überrollbügels 1 zusammen. Der Haltehebel 15 ist ein zweiarmiger Hebel. Ein Hebelarm ist dem Haltevorsprung 19 der Überrollbügel 1 zugeordnet und der andere Hebelarm ist von einem Stellglied 20 beaufschlagbar. Bei dem Stellglied 20 handelt es sich um einen kleinen Hydraulikzylinder mit einer verschiebbaren Betätigungsstange, die gegen den in Figur 2 rechten Hebelarm des Haltehebels 15 wirkt.

Der als willkürlich steuerbares Stellelement 9 dienende Hydraulikzylinder 10 ist gegenüber der Grundplatte 2 über eine Schwinge 21 abgestützt, die ihrerseits wiederum durch einen Stützhebel 22 gegenüber der Grundplatte 2 festlegbar ist. Die Schwinge 21 ist eine doppelarmige Schwinge mit zueinander im Winkel angeordneten Schwingenarmen. An dem in den Darstellungen nach Figur 2 bis 4 linken Schwingenarm ist der Hydraulikzylinder 10 angelenkt, während der andere, rechte Schwingenarm mit dem Stützhebel 22 zusammenwirkt. Auch der Stützhebel 22 ist gegen die Wirkung einer Feder 23 aus seiner Stützposition schwenkbar.

Der Stützhebel 22 nimmt bei seinem Verschwenken aus der in den Figuren dargestellten Stützlage den Haltehebel 15 mit und schwenkt diesen damit aus seiner Halteposition heraus. Der Haltehebel 15, die Schwinge 21, der Stützhebel 22 und die Überrollbügel 1 sind um zueinander parallele annähernd zu der Ebene der Grundplatte 2 senkrechte Schwenkachsen schwenkbar, wobei der Stützhebel 12 und der Haltehebel 15 eine gemeinsame Schwenkachse 24 haben.

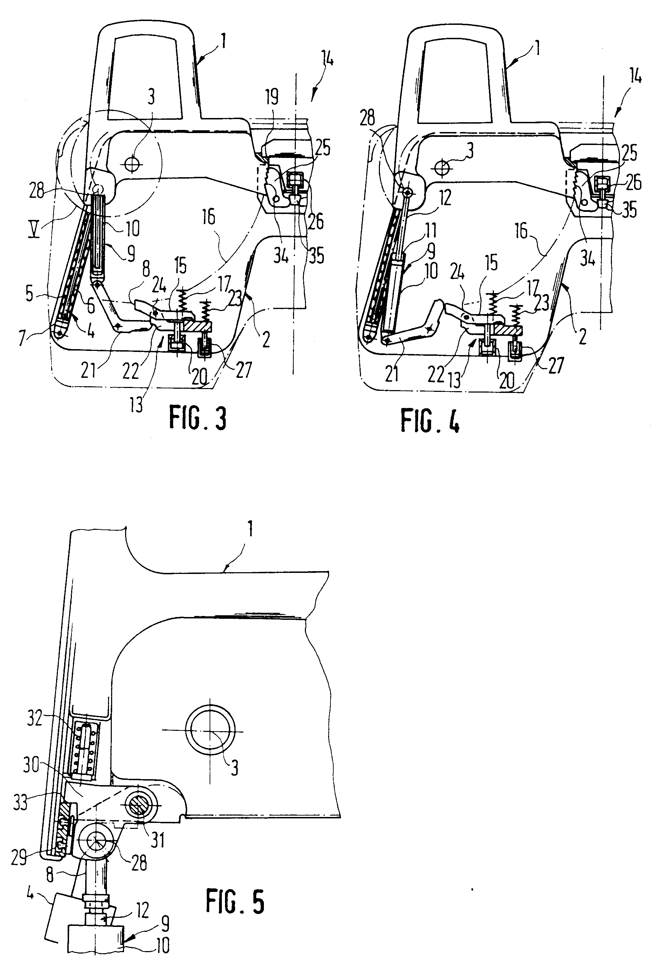

Wenn die Überrollbügel 1 willkürlich ausgefahren werden sollen, wird über das hydraulisch betätigbare Stellglied 20 der Haltehebel 15 entgegen dem Uhrzeigersinn aus seiner Halteposition verschwenkt und gibt dadurch den Haltevorsprung 19 des Überrollbügels 1 frei. Das unter der Wirkung der Druckfeder 6 stehende Stellelement 4 und das den Hydraulikzylinder 10 umfassende Stellelement 9 fahren von der in Figur 2 ersichtlichen Stellung in die in Figur 3 ersichtliche Stellung ein und bringen dadurch den Überrollbügel 1 in seine nach oben gerichtete Stützlage, in der er durch Verrasten mit der Sperrklinke 25 der Verriegelungsvorrichtung 14 verriegelt wird.

Soll danach der Überrollbügel 1 durch willkürliche, manuelle Steuerung wieder eingefahren werden, so entriegelt zunächst ein kleiner Stellzylinder 26 der Verriegelungsvorrichtung 14 die federbelastete Klinke 25 und der untere Arbeitsraum des Hydraulikzylinders 10 wird über geeignete hydraulische Schaltventile mit Druck versorgt. Die Kolbenstange 12 fährt aus und verschwenkt den Überrollbügel 1 aus der in Figur 3 dargestellten aufgerichteten Lage im Uhrzeigersinn in die aus Figur 2 ersichtliche abgesenkte Ruhelage, in der der Haltevorsprung 19 des Überrollbügels 1 mit der Stirnseite 18 des federbelasteten Haltehebels 15 verrastet.

Bei Auslösung der Überrollbügel 1 durch einen eine Überschlagsituation erkennenden Sensor wird ein aus einem Druckspeicher beaufschlagbares, besonders schnell schaltendes hydraulisches Stellglied 27 geschaltet, dessen Betätigungsstange den Stützhebel 22 mit seinem rechten Ende nach oben schwenkt. Dies bewirkt durch die Mitnahme des Haltehebels 15 nicht nur eine Freigabe des Überrollbügels 1 in seiner Ruheposition, sondern auch eine sofortige Freigabe der Schwinge 21, die den Hydraulikzylinder 10 an seinem unteren Bereich abgestützt hat. Das unter der Wirkung der Druckfeder 6 arbeitende Stellelement 4 kann daher ohne Behinderung durch den Hydraulikzylinder 10 den Überrollbügel 1 sehr schnell an seinem gemäß Figur 2 links von der Schwenkachse 3 liegenden Endbereich nach unten ziehen und somit in die aus der Figur 4 ersichtliche Stützstellung schwenken, in der er wiederum durch die Sperrklinke 25 sicher verriegelt wird. In dem durch die Druckfeder 6 wirksamen Stellelement 4 selbst oder an einer seiner Anlenkstellen kann dabei eine geeignete Dämpfung vorgesehen werden, die ein Zurückfedern oder Schwingen der Überrollbügel 1 verhindern, wenn diese Bügel sehr schnell in die ausgefahrene Stellung verlagert wurden.

Zum Einfahren der Überrollbügel 1 nach einer sensorgesteuerten Auslösung wird zunächst der hydraulische Zylinder 10 eingefahren, wodurch die Schwinge 21 so lange im Uhrzeigersinn gedreht wird, bis sie mit dem Stützhebel 22 verrastet. Es ist dann der Zustand hergestellt, wie er in Figur 3 ersichtlich ist. Sodann erfolgt das Einfahren der Überrollbügel 1 genauso wie schon weiter oben beschrieben nach Lösen der Sperrklinke 25.

Wie man in den Figuren 2 bis 5 erkennt, greifen der Hydraulikzylinder 10 und das unter der Wirkung der Feder 6 wirksame Stellelement 4 über ein gemeinsames Drehgelenk 28 an dem Überrollbügel 1 an. Die Überrollbügel 1 können mit einem Einklemmschutz versehen sein, wozu im Bereich des Drehgelenks 28 ein beim Einfahren des Überrollbügels 1 gegen Federkraft begrenzt verlagerbares Stützglied vorgesehen ist, das bei seiner Verlagerung einen die Einfahrbewegung unterbrechenden Schalter 29 betätigt. Der Schalter 29 stoppt bei seiner Betätigung sofort die Einfahrbewegung der Überrollbügel 1. Ein solches gegen Federkraft verlagerbares Stützglied könnte auch in dem Angriffsbereich des Hydraulikzylinders 10 an der Schwinge 21 vorgesehen sein.

Bei dem dargestellten Ausführungsbeispiel ist gemäß Figur 5 das Stützglied eine das Drehgelenk 28 aufweisende Gelenkschwinge 30, die um eine zur Drehgelenkachse parallele Achse 31 am Überrollbügel 1 begrenzt schwenkbar gelagert ist. Die Gelenkschwinge 30 stützt sich unter der Wirkung einer Feder 32 gegen einen Anschlag 33 des Überrollbügels 1 ab. Besteht im Verlauf der Bewegung des Überrollbügels 1 aus der in Figur 3 ersichtlichen Position in die in Figur 2 ersichtliche Position die Gefahr eines Einklemmens eines Körperteils oder eines anderen Gegenstandes, so wird die Gelenkschwinge 30 gegen die Wirkung der Druckfeder 32 in der Darstellung nach Figur 5 etwas im Uhrzeigersinn von dem Anschlag 33 wegbewegt. Dadurch nähert sich der die Gelenkaugen für das Drehgelenk 28 aufweisende untere Bereich der Gelenkschwinge 30 dem Schalter 29, der auch durch eine Kontaktfolie gebildet sein kann. Die Betätigung des Schalters 29 bewirkt ein sofortiges Anhalten der Einfahrbewegung des Überrollbügels 1.

Gemäß Figur 1 sind die Überrollbügel 1 in den oberen Seitenbereichen der Grundplatte 2 gelagert und über eine in der Mitte der Grundplatte 2 vorgesehene Verriegelungsvorrichtung 14 in der aufgerichteten Stützlage festlegbar. Die Verriegelungsvorrichtung 14 weist zwei je einem bogenförmig verlaufenden Zahnprofil 34 eines jeden Überrollbügels 1 zugeordnete Sperrklinken 25 auf, die von einem gemeinsamen Stellzylinder 26 durch einen am freien Ende der Betätigungsstange des Zylinders vorgesehenen Konus 35 aus ihrer Verriegelungsposition heraus schwenkbar sind.

Die Elemente des Antriebs der Überrollbügel 1 sind an der Grundplatte 2 gut außerhalb des Fahrzeugs vormontierbar und genau einstellbar. Sie behalten die eingestellte Justierung bei, denn die Grundplatte 2 bildet ein in sich sehr stabiles Bauteil, das auch gut im Bereich der Bügellagerung, im Bereich der Verriegelungsvorrichtung 14 sowie im Bereich der unteren Abstützung der Stellelemente für die Überrollbügel 1 mit der Fahrzeugkarosserie verbindbar ist. Die Anordnung der Stellelemente und der Überrollbügel 1 an der Grundplatte 2 ermöglicht auch eine sehr platzsparende und flache Bauweise des gesamten Systems. Schließlich ist die Bewegungsrichtung der Überrollbügel 1 auch im Hinblick auf ein mögliches Verletzungsrisiko der Fahrzeuginsassen günstig, das ferner auch durch den beschriebenen Einklemmschutz weiter vermindert werden kann.

## Patentansprüche

1. Antriebsvorrichtung für einen Überrollbügel (1) eines Kraftfahrzeugs, insbesondere eines Cabriolets, der aus einer abgesenkten Ruhelage in eine nach oben gerichtete Stützlage und zurück verlagerbar ist und hierzu mit einem ersten unter Wirkung eines Federspeichers (6) betätigbaren und durch einen Sensor gesteuerten Stellelement (4) und einem zweiten, in seiner Bewegungsrichtung willkürlich steuerbaren Stellelement (9) verbunden ist, wobei beide Stellelemente (4, 9) sich gegen den Fahrzeugaufbau abstützen, an dem ferner eine Kaltevorrichtung (13) für den abgesenkten Überrollbügel (1) und eine Verriegelungsvorrichtung (14) für den in Stützlage befindlichen Überrollbügel (1) vorgesehen sind,
dadurch gekennzeichnet, daß sowohl die Stellelemente (4, 9), die Haltevorrichtung (13) und die Verriegelungsvorrichtung (14) als auch der Überrollbügel (1) an einer in Fahrzeugguerrichtung angeordneten Grundplatte (2) gelagert sind, die am Fahrzeugaufbau befestigbar ist, wobei der Überrollbügel (1) in einer zur Grundplatte (2) parallelen Ebene schwenkbar ist.

2. Antriebsvorrichtung nach Anspruch 1, dadurch gekennzeichnet, daß an einer sich in Fahrzeugguerrichtung und annähernd lotrecht erstreckenden Grundplatte (2) zwei Überrollbügel (1) gelagert sind.

3. Antriebsvorrichtung nach Anspruch 1 oder 2, dadurch gekennzeichnet, daß die Haltevorrichtung (13) einen in Ruhelage in die Bewegungsbahn (16) des Überrollbügels (1) ragenden und aus dieser herausschwenkbaren Haltehebel (15) umfaßt.

4. Antriebsvorrichtung nach Anspruch 3, dadurch gekennzeichnet, daß der Haltehebel (15) gegen die Wirkung einer Feder (17) aus seiner Halteposition schwenkbar ist.

5. Antriebsvorrichtung nach Anspruch 3, dadurch gekennzeichnet, daß der Haltehebel (15) mit einer Stirnseite (18) mit einem entsprechenden Haltevorsprung (19) des Überrollbügels (1) zusammenwirkt.

6. Antriebsvorrichtung nach Anspruch 5, dadurch gekennzeichnet, daß der Kaltehebel (15) ein zweiarmiger Hebel ist, wobei ein Hebelarm dem Haltevorsprung (19) des Überrollbügels (1) zugeordnet und der andere Hebelarm von einem Stellglied (20) beaufschlagbar ist.

7. Antriebsvorrichtung nach Anspruch 6, dadurch gekennzeichnet, daß das Stellglied (20) ein Hydraulikzylinder mit einer verschiebbaren Betätigungsstange ist.

8. Antriebsvorrichtung nach Anspruch 1, dadurch gekennzeichnet, daß das willkürlich steuerbare Stellelement (Hydraulikzylinder 10) gegenüber der Grundplatte (2) über eine Schwinge (21) abgestützt ist, die durch einen Stützhebel (22) gegenüber der Grundplatte (2) festlegbar ist.

9. Antriebsvorrichtung nach Anspruch 8, gekennzeichnet durch eine doppelarmige Schwinge (21), an deren einem Schwingenarm das willkürlich steuerbare Stellelement (Hydraulikzylinder 10) angelenkt ist, wobei der andere Schwingenarm mit dem Stützhebel (22) zusammenwirkt.

10. Antriebsvorrichtung nach Anspruch 8 oder 9, dadurch gekennzeichnet, daß der Stützhebel (22) gegen die Wirkung einer Feder (23) aus seiner Stützposition schwenkbar ist.

11. Antriebsvorrichtung nach Anspruch 3 und 8, dadurch gekennzeichnet, daß der Stützhebel (22) beim Verschwenken aus seiner Stützlage den Haltehebel (15) aus seiner Halteposition herausschwenkt.

12. Antriebsvorrichtung nach Anspruch 3 und 8, dadurch gekennzeichnet, daß der Haltehebel (15), die Schwinge (21), der Stützhebel (22) und die Überrollbügel (1) um zueinander parallele, annähernd zu der Ebene der Grundplatte (2) senkrechte Schwenkachsen schwenkbar sind.

13. Antriebsvorrichtung nach Anspruch 12, dadurch gekennzeichnet, daß der Stützhebel (22) und der Haltehebel (15) eine gemeinsame Schwenkachse (24) haben.

14. Antriebsvorrichtung nach Anspruch 1, dadurch gekennzeichnet, daß das willkürlich steuerbare Stellelement ein doppelt wirkender Hydraulikzylinder (10) ist.

15. Antriebsvorrichtung nach Anspruch 14, dadurch gekennzeichnet, daß der Hydraulikzylinder (10) und das durch eine Feder wirksame Stellelement (4) über ein gemeinsames Drehgelenk (28) an dem Überrollbügel (1) angreifen.

16. Antriebsvorrichtung nach Anspruch 14 oder 15, dadurch gekennzeichnet, daß im Bereich des Drehgelenks (28) oder im Bereich der Abstützung des Hydraulikzylinders (10) an der Grundplatte (2) ein beim Einfahren des Überrollbügels (1) gegen Federkraft begrenzt verlagerbares Stützglied (Gelenkschwinge 30) vorgesehen ist, das bei Verlagerung einen die Einfahrbewegung unterbrechenden Schalter (29) betätigt.

17. Antriebsvorrichtung nach Anspruch 15 und 16, dadurch gekennzeichnet, daß das Stützglied eine das Drehgelenk (28) aufweisende Gelenkschwinge (30) ist, die begrenzt um eine zur Drehgelenkachse parallele Achse (31) am Überrollbügel (1) schwenkbar gelagert ist und unter der Wirkung einer Feder (32) sich gegen einen Anschlag (33) des Überrollbügels (1) abstützt.

18. Antriebsvorrichtung nach Anspruch 2, dadurch gekennzeichnet, daß die Überrollbügel (1) in den oberen Seitenbereichen der Grundplatte (2) gelagert sind und über eine in der Mitte der Grundplatte vorgesehene Verriegelungsvorrichtung (14) in der aufgerichteten Stützlage festlegbar sind.

19. Antriebsvorrichtung nach Anspruch 18, dadurch gekennzeichnet, daß die Verriegelungsvorrichtung (14) zwei je einem bogenförmig verlaufenden Zahnprofil (34) eines Überrollbügels (1) zugeordnete federbelastete Sperrklinken (25) aufweist, die von einem gemeinsamen Stellglied (Stellzylinder 26) aus ihrer Verriegelungsposition herausschwenkbar sind.

## Claims

1. A driving device for a roll bar, hoop or stirrup (1) of a motor vehicle, especially a convertible, which can be moved from a recessed resting position into an upward-facing supporting position and back, and to this end is connected to a first control element (4) actuatable under the action of a spring energy store (6) and controlled by a sensor and to a second control element (9) which can be controlled at will in its direction of movement, wherein each control element (4, 9) is braced against the vehicle body upon which are further provided a retaining device (13) for the recessed roll bar, hoop or stirrup (1) and a locking device (14) for the roll bar, hoop or stirrup in its supporting position,
characterised in that the control elements (4, 9), the retaining device (13), the locking device (14) and the roll bar, hoop or stirrup (1) are mounted on a baseplate (2) arranged transversely to the vehicle direction and which can be secured to the vehicle body, wherein the roll bar, hoop or stirrup (1) can be swivelled in a plane parallel to the baseplate (2).

2. A driving device according to claim 1, characterised in that two roll bars, hoops or stirrups (1) are arranged on a baseplate (2) which extends transversely and approximately perpendicular to the vehicle direction.

3. A driving device according to either claim 1 or 2, characterised in that the retaining device (13) comprises a retaining lever (15) which, in a resting position, projects into the movement path (16) of the roll bar, hoop or stirrup (1) and can be swivelled out of that path.

4. A driving device according to claim 3, characterised in that the retaining lever (15) can be swivelled out of its retaining position against the action of a spring (17).

5. A driving device according to claim 3, characterised in that the retaining lever (15) works with its front side (18) in conjunction with a corresponding retaining projection (19) on the roll bar, hoop or stirrup (1).

6. A driving device according to claim 5, characterised in that the retaining lever (15) is a two-arm lever, with one lever arm assigned to the retaining projection (19) of the roll bar, hoop or stirrup (1) and that the other lever arm can be impinged upon by an actuator (20).

7. A driving device according to claim 6, characterised in that the actuator (20) is a hydraulic cylinder with a displaceable actuating rod.

8. A driving device according to claim 1, characterised in that the control element which can be controlled at will (hydraulic cylinder 10) is braced against the baseplate (2) via a rocker (21) which is fixed relative to the baseplate (2) via a supporting lever (22).

9. A driving device according to claim 8, characterised by a two-arm rocker (21) to one arm of which is articulated the control element (hydraulic cylinder 10) which can be controlled at will, wherein the other rocker arm works in conjunction with the supporting lever (22).

10. A driving device according to either claim 8 or 9, characterised in that the supporting lever (22) can be swivelled out of its supporting position against the action of a spring (23).

11. A driving device according to claims 3 and 8, characterised in that, upon swivelling from its supporting position, the supporting lever (22) swivels the retaining lever (15) out of its retaining position.

12. A driving device according to claims 3 and 8, characterised in that the retaining lever (15), the rocker (21), the supporting lever (22) and the roll bar, hoop or stirrup (1) can be swivelled about vertical swivel axes which are parallel to each other and approximately vertical to the plane of the baseplate (2).

13. A driving device according to claim 12, characterised in that the supporting lever (22) and the retaining lever (15) have a common swivel axis (24).

14. A driving device according to claim 1, characterised in that the control element which can be controlled at will is a double-action hydraulic cylinder (10).

15. A driving device according to claim 14, characterised in that the hydraulic cylinder (10) and the control element (4), effective through a spring, engage with the roll bar, hoop or stirrup via a common swivel joint (28).

16. A driving device according to either claim 14 or 15, characterised in that a supporting element (articulated link 30), displaceable through a limited distance against the force of a spring upon retraction of the roll bar, hoop or stirrup (1), is arranged on the baseplate (2) in the region of the swivel joint (28) or in the region of the support of the hydraulic cylinder (10), and upon displacement actuates a switch (29) which interrupts the retraction movement.

17. A driving device according to claims 15 and 16, characterised in that the supporting element is an articulated link (30) which is provided with the swivel joint (28) and is arranged such that it can be swivelled in a limited manner about an axis (31) parallel to the swivel joint axis, and is braced against a limit stop (33) of the roll bar, hoop or stirrup (1) under the action of a spring (32).

18. A driving device according to claim 2, characterised in that the roll bars, hoops or stirrups (1) are mounted in the upper lateral regions of the baseplate (2) and can be fixed in an upright supporting position through a locking device (14) provided in the middle of the baseplate.

19. A driving device according to claim 18, characterised in that the locking device (14) is provided with two spring-loaded ratchets 25 each assigned to the curved toothed profile (34) of a roll bar, hoop or stirrup (1) such that the said ratchets (25) can be swivelled out of their locking positions by a common actuator (control cylinder 26).

## Revendications

1. Dispositif d'entraînement d'un arceau de sécurité (1) d'un véhicule, en particulier d'un cabriolet, dans lequel l'arceau peut passer d'une position rabattue à une position dressée d'appui et inversement, cet arceau étant relié pour cela d'une part à un premier élément de réglage (4) mobile sous l'action d'un accumulateur de force élastique (6) par la commande d'un détecteur, et d'autre part à un second élément de réglage (9) dont le sens du mouvement peut être commandé volontairement, ces deux éléments (4, 9) prenant appui sur la structure du véhicule portant de plus un dispositif (13) de maintien de l'arceau (1) rabattu et un dispositif de verrouillage (14) de l'arceau en position d'appui, caractérisé en ce que les éléments de réglage (4, 9), le dispositif de maintien (13), le dispositif de verrouillage (14) comme l'arceau de sécurité (1) sont montés sur une plaque de base (2) disposée transversalement par rapport à l'axe longitudinal du véhicule et qui peut être fixée à la structure de celui-ci, l'arceau (1) pouvant basculer dans un plan parallèle à la plaque de base (2).

2. Dispositif d'entraînement selon la revendication 1, caractérisé en ce que deux arceaux de sécurité (1) sont montés sur une plaque de base (2), transversale par rapport au véhicule et sensiblement verticale.

3. Dispositif d'entraînement selon la revendication 1 ou 2, caractérisé en ce que le dispositif de maintien (13) comporte un levier de maintien (15) empiétant, en position de repos de l'arceau (1), sur la trajectoire (16) de celui-ci et pouvant s'en écarter par basculement.

4. Dispositif d'entraînement selon la revendication 3, caractérisé en ce que le levier de maintien (15) peut s'écarter, par basculement, de sa position de maintien, contre l'action d'un ressort (17).

5. Dispositif d'entraînement selon la revendication 3, caractérisé en ce que le levier de maintien (15) coopère par son extrémité frontale (18) avec une saillie de maintien (19) portée par l'arceau de sécurité (1).

6. Dispositif d'entraînement selon la revendication 5, caractérisé en ce que le levier de maintien (15) comporte deux bras, dont l'un est associé à la saillie de maintien (19) de l'arceau (1) tandis que l'autre peut être actionné par un organe de réglage (20).

7. Dispositif d'entraînement selon la revendication 6, caractérisé en ce que l'organe de réglage (20) est un vérin hydraulique agissant par déplacement de sa tige.

8. Dispositif d'entraînement selon la revendication 1, caractérisé en ce que l'élément de réglage à commande volontaire (vérin hydraulique 10) s'appuie sur la plaque de base (2) par l'intermédiaire d'une bielle (21) qui peut être bloquée, par rapport à la plaque, par un levier d'appui (22).

9. Dispositif d'entraînement selon la revendication 8, caractérisé par une bielle (21) comportant deux bras sur l'un desquels est articulé l'élément de réglage à commande volontaire (vérin hydraulique 10) tandis que l'autre bras coopère avec le levier d'appui (22).

10. Dispositif d'entraînement selon la revendication 8 ou 9, caractérisé en ce que le levier d'appui (22) peut s'écarter de sa position d'appui par basculement, contre l'action d'un ressort (23).

11. Dispositif d'entraînement selon les revendications 3 et 8, caractérisé en ce que le levier d'appui (22), lorsqu'il quitte sa position d'appui par basculement, fait quitter au levier de maintien (15) sa position de maintien par basculement.

12. Dispositif d'entraînement selon les revendications 3 et 8, caractérisé en ce que le levier de maintien (15), la bielle (21), le levier d'appui (22) et les arceaux de sécurité (1) peuvent basculer autour d'axes parallèles entre eux, et sensiblement perpendiculaires au plan de la plaque de base (2).

13. Dispositif d'entraînement selon la revendication 12, caractérisé en ce que le levier d'appui (22) et le levier de maintien (15) ont un axe commun de basculement (24)

14. Dispositif d'entraînement selon la revendication 1, caractérisé en ce que l'organe de réglage à commande volontaire est un vérin hydraulique (10) à double effet.

15. Dispositif d'entraînement selon la revendication 14, caractérisé en ce que le vérin (10) et l'élément de réglage (4) agissant sous l'action d'un ressort, sont en prise avec l'arceau de sécurité (1) par l'intermédiaire d'une articulation de rotation commune (28) portée par cet arceau.

16. Dispositif d'entraînement selon la revendication 14 ou 15, caractérisé en ce qu'il comporte, dans la zone de l'articulation (28) ou de l'appui du vérin hydraulique (10) sur la plaque de base (2), un organe d'appui (bielle articulée 30) se déplaçant selon une course limitée, contre l'action d'un ressort, lors de la rentrée de l'arceau (1), en actionnant au cours de ce déplacement un interrupteur (29) stoppant le mouvement de l'arceau.

17. Dispositif d'entraînement selon les revendications 15 et 16, caractérisé en ce que l'organe d'appui est une bielle articulée (30) portant l'articulation de rotation (28), pouvant basculer de manière limitée sur un axe (31) porté par l'arceau (1) et parallèle à celui de l'articulation (28), et en appui, par l'effet d'un ressort (32), sur une butée (33) portée par l'arceau de sécurité (1).

18. Dispositif d'entraînement selon la revendication 2, caractérisé en ce que les arceaux de sécurité (1) sont montés sur les parties latérales supérieures de la plaque de base (2) et peuvent être immobilisés en position dressée d'appui par un dispositif de verrouillage (14) monté au milieu de la plaque de base.

19. Dispositif d'entraînement selon la revendication 18, caractérisé en ce que le dispositif de verrouillage (14) comporte deux cliquets d'arrêt (25) coopérant chacun avec une denture (34) en arc de cercle portée par un des arceaux, ces cliquets étant sous l'action de ressort et pouvant quitter leur position de verrouillage, par basculement produit par un organe de commande commun (vérin de réglage (26)).
